# EUROPEAN PATENT APPLICATION

(11) **EP 3 950 899 A1**
(43) Date of publication of application: **09.02.2022**
(21) Application number: 19921359.6
(22) Date of filing: 26.03.2019
(51) Int. Cl.: C10M 169/04, C10M 101/02, C10M 105/32, C10M 107/02, C10M 143/00, C10M 171/02, C10N 20/00, C10N 20/02, C10N 20/04, C10N 30/02, C10N 30/06, C10N 30/10, C10N 40/04

(54) **LUBRICATING OIL COMPOSITION AND METHOD FOR PRODUCING SAME**

(71) Applicant: Mitsui Chemicals, Inc., Tokyo 105-7122 (JP)
(72) Inventor: ABE Shota, Sodegaura-shi, Chiba 299-0265 (JP)
(74) Representative: Hoffmann Eitle
(86) International application number: PCT/JP2019/013004
(87) International publication number: WO 2020/194549

(57) **Abstract**

The present invention provides a lubricating oil composition comprising a polymer for improving viscosity, the composition suppressing viscosity increase in low temperature and having an excellent low-temperature property, and having low viscosity decrease caused by shearing. The present invention is a lubricating oil composition containing from 30 to 90% by weight of a liquid random copolymer (A) of ethylene and α-olefin produced by a specific method, and 10 to 70% by weight of a lubricating oil base consisting of one or more components selected from specific synthetic oil (B) or mineral oil (C) (note that the sum total of the components (A), (B) and (C) is 100% by weight).

## Description

### Technical Field

The present invention relates to a lubricating oil composition comprising an ethylene·α-olefin copolymer and a method for manufacturing thereof.

### Background Art

Oil products have temperature dependency of viscosity, which is a characteristic that viscosity largely changes when temperature changes. For example, the temperature dependency of viscosity is preferably small. For the purpose of lessening the temperature dependency of viscosity, a certain polymer that is soluble in a lubricating oil base is used in a lubricating oil as a viscosity-modifying agent. In recent years, α-olefin copolymers are widely used as such viscosity-modifying agents, and various improvements have been performed in order to further improve the balance of characteristics of lubricating oils (as exemplified in Patent Literature 1).

The viscosity index-improving agents described above are generally used for keeping proper viscosity upon high temperatures. However, in recent years, viscosity-modifying agents that suppress viscosity increase upon especially low temperatures (that have excellent low-temperature property) and that have excellent durability and thermal and oxidation stability are demanded in the situation that energy conservation and resources saving are strongly intended as part of reducing loads for environments. In general applications of lubricating oils, in order to obtain an excellent low-temperature property, a method for using polymers having molecular weights as high as possible is known because suppressing polymer concentration as low as possible is advantageous, and because it is also advantageous in terms of economic aspects. On the other hand, there is a problem that the higher the molecular weight is, the worse the shear stability is. In the application of an industrial lubricating oil, especially an oil for gears for wind power generation, higher low-temperature property and shear stability are demanded, and the quality considering the balance of both characteristics is required.

### Citation List

### Patent Literature

Patent Literature 1: WO 00/34420 A1

### Summary of Invention

### Technical Problem

In lubricating oil bases, mineral oils are classified in three classes of the Groups (I) to (III) by API quality classification, and further poly·α-olefin (PAO) is classified in the Group (IV), and others are classified in the Group (V). In various applications of lubricating oils for automobiles, in order to cope with advancement of required characteristics and reduction of environmental loads, the use is shifting from the mineral oils of Group (I), which is conventionally and widely used, to mineral oils of Groups (II) and (III) or synthetic oils such as poly·α-olefin, and the used ratio of the latter is becoming higher. On the other hand, longer duration of use and high durability are also required in the application of an industrial lubricating oil, and the mineral oils of Group (III) or poly·α-olefin as described above is used. Especially, in the recent oil for gears for wind power generation, shearing stability is strongly required as the main parameter of durability. It is difficult to adjust the shearing stability required here by viscosity adjusting agents of the conventional high molecular weight-type, so α-olefin polymers having relatively lower molecular weights such as polybutene are used. However, depending on applications, there has been room for improving viscosity characteristics, especially adequate fluidity in low temperatures of polybutene. Also, in the oil for gears for wind power generation, in addition to conventionally required characteristics, a high micro-pitching prevention property is required. Micro-pitching is a fatigue process caused just before gear damage by excess stress cycles in the area of rolling elastohydrodynamic lubrication (EHL) under a high load. In such a situation, the present inventors have intensively studied and have found that the problems described above are solved by combining an ethylene·α-olefin copolymer having a certain range of ethylene content, viscosity, and molecular weight distribution and one or more synthetic oils and/or mineral oils having a certain viscosity, viscosity index and pour point with a base, and have accomplished the present invention.

The object to be achieved by the present invention is to provide an industrial lubricating oil having excellent balance of low-temperature viscosity properties and shear stability, and having high thermal and oxidation stability and high micro-pitching prevention performance.

### Solution to Problem

The specific embodiments of the present invention include the following aspects:
[1] A lubricating oil composition containing 30 to 90% by weight of a liquid random copolymer (A) of ethylene and α-olefin, the liquid random copolymer (A) being prepared by the below method (α), and 10 to 70% by weight of a lubricating oil base consisting of one or more components selected from a synthetic oil (B) having the properties of (B1) to (B3) or a mineral oil (C) having the properties of (C1) to (C3) (note that the sum total of the components (A), (B) and (C) is 100% by weight)
   (B1) The synthetic oil has a kinematic viscosity at 100°C of 2 to 20 mm²/s
   (B2) The synthetic oil has a viscosity index of 130 or more
   (B3) The synthetic oil has a pour point of -30°C or lower
   (C1) The mineral oil has a kinematic viscosity at 100°C of 2 to 10 mm²/s
   (C2) The mineral oil has a viscosity index of 120 or more
   (C3) The mineral oil has a pour point of -10°C or lower (Method (α))
   a method (α) for preparing a liquid random copolymer of ethylene and α-olefin,
   comprising a step of carrying out solution polymerization of ethylene and α-olefin having 3 to 20 carbon atoms, under a catalyst system containing
   (a) a bridged metallocene compound represented by the following Formula 1 and
   (b) at least one compound selected from a group consisting of
      (i) an organoaluminum oxy-compound, and
      (ii) a compound which reacts with the bridged metallocene compound to form ion pairs.

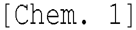

[In Formula 1, R¹, R², R³, R⁴, R⁵, R⁸, R⁹ and R¹² are respectively and independently hydrogen atom, hydrocarbon group or silicon-containing hydrocarbon group, and adjoining groups are optionally connected to each other to form a ring structure,
R⁶ and R¹¹, being the same, are hydrogen atom, hydrocarbon group or silicon-containing hydrocarbon group,
R⁷ and R¹⁰, being the same, are hydrogen atom, hydrocarbon group or silicon-containing hydrocarbon group,
R⁶ and R⁷ are optionally connected to hydrocarbon having 2 to 3 carbon atoms to form a ring structure,
R¹¹ and R¹⁰ are optionally connected to hydrocarbon having 2 to 3 carbon atoms to form a ring structure,
R⁶, R⁷, R¹⁰ and R¹¹ are not hydrogen atom at the same time;
Y is a carbon atom or silicon atom;
R¹³ and R¹⁴ are independently aryl groups;
M is Ti, Zr or Hf;
Q is independently halogen, hydrocarbon group, an anionic ligand or a neutral ligand which can be coordinated to a lone pair of electrons; and
j is an integer of 1 to 4.]

[2] The lubricating oil composition of the aforementioned [1], wherein in the metallocene compound represented by the above Formula 1, at least one among substituents (R¹, R², R³ and R⁴) bonded to cyclopentadienyl group is a hydrocarbon group having 4 or more carbon atoms.

[3] The lubricating oil composition of the aforementioned [1] or [2], wherein R⁶ and R¹¹, being the same, are hydrocarbon groups having 1 to 20 carbon atoms.

[4] The lubricating oil composition according to any of the aforementioned [1] to [3], wherein in the metallocene compound represented by Formula 1, the substituent (R² or R³) bonded to the 3-position of the cyclopentadienyl group is a hydrocarbon group.

[5] The lubricating oil composition of the aforementioned

[4], wherein in the metallocene compound represented by Formula 1, the hydrocarbon group (R² or R³) bonded to the 3-position of the cyclopentadienyl group is an n-butyl group.

[6] The lubricating oil composition according to any of the aforementioned [1] to [5], wherein in the metallocene compound represented by Formula 1, substituents (R⁶ and R¹¹) bonded to the 2-position and 7-position of the fluorenyl group are all tert-butyl groups.

[7] The lubricating oil composition according to any of the aforementioned [1] to [6], wherein the compound which reacts with the bridged metallocene compound to form ion pairs is a compound represented by the following Formula 6: 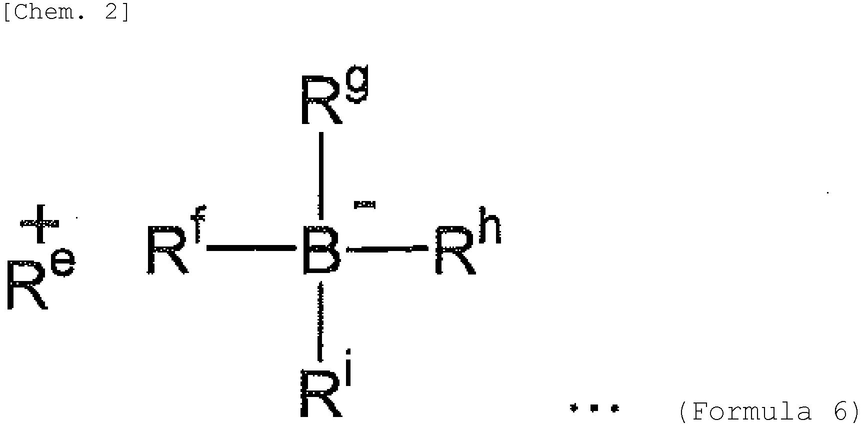 [In Formula 6, R^{e+} is H⁺, a carbenium cation, an oxonium cation, an ammonium cation, a phosphonium cation, a cycloheptyltrienyl cation, or a ferrocenium cation having a transition metal, and R^{f} to Rⁱ each is independently a hydrocarbon group having 1 to 20 carbon atoms.]

[8] The lubricating oil composition according to the aforementioned [7], wherein the ammonium cation is a dimethylanilinium cation.

[9] The lubricating oil composition according to the aforementioned [7] or [8], wherein the catalyst system further comprises an organoaluminum compound selected from a group consisting of trimethyl aluminum and triisobutyl aluminum.

[10] The lubricating oil composition according to any of the aforementioned [1] to [9], wherein the copolymer (A) is a copolymer consisting of ethylene and α-olefin having 3 to 10 carbon atoms.

[11] The lubricating oil composition according to any of the aforementioned [1] to [10], wherein the synthetic oil (B) is a lubricating oil base selected from a poly·α-olefin (PAO) or an ester oil.

[12] The lubricating oil composition according to any of the aforementioned [1] to [11], wherein the lubricating oil composition further contains a pour point lowering agent.

[13] The lubricating oil composition according to any of the aforementioned [1] to [12], wherein the viscosity of the lubricating oil composition at 40°C is in the range of 190 to 750 mm²/s.

[14] A lubricating oil composition containing from 30 to 90% by weight of a liquid random copolymer of ethylene and α-olefin having the properties of (A1) to (A5) below, and from 10 to 70% by weight of a lubricating oil base consisting of one or more components selected from a synthetic oil (B) having the properties of (B1) to (B3) or a mineral oil (C) having the properties of (C1) to (C3) (note that the sum total of the components (A), (B) and (C) is 100% by weight):
(A1) The liquid random copolymer contains 40 to 60 mol% of the ethylene unit and 60 to 40 mol% of an α-olefin unit having 3 to 20 carbon atoms
(A2) The liquid random copolymer has the number average molecular weight (Mn) of 500 to 10,000 and the molecular weight distribution of 3 or less (note that Mw/Mn and Mw are the weight average of the molecular weight) measured by gel permeation chromatography (GPC)
(A3) The liquid random copolymer has 100°C kinetic viscosity of 30 to 5,000 mm²/s
(A4) The copolymer has a pour point of 30 to -45°C
(A5) The copolymer has the bromine number of 0.1g/100g or less
(B1) The synthetic oil has a kinematic viscosity at 100°C of 2 to 20 mm²/s
(B2) The synthetic oil has a viscosity index of 130 or more
(B3) The synthetic oil has a pour point of -30°C or lower
(C1) The mineral oil has a kinematic viscosity at 100°C of 2 to 10 mm²/s
(C2) The mineral oil has a viscosity index of 120 or more
(C3) The mineral oil has a pour point of -10°C or lower

[15] The lubricating oil composition for industrial use according to any of the aforementioned [1] to [14], wherein the lubricating oil composition is an oil composition for gears for wind power generation.

[16] A method for producing a lubricating oil composition comprising the steps of
preparing a liquid random copolymer (A) of ethylene and α-olefin by the method (α) below, and
mixing 30 to 90% by weight of the liquid random copolymer (A), and from 10 to 70% by weight of a lubricating oil base consisting of one or more components selected from a synthetic oil (B) having the properties of (B1) to (B3) or a mineral oil (C) having the properties of (C1) to (C3) (note that the sum total of the components (A), (B) and (C) is 100 parts by weight)
   (B1) The synthetic oil has a kinematic viscosity at 100°C of 2 to 20 mm²/s
   (B2) The synthetic oil has a viscosity index of 130 or more
   (B3) The synthetic oil has a pour point of -30°C or lower
   (C1) The mineral oil has a kinematic viscosity at 100°C of 2 to 10 mm²/s
   (C2) The mineral oil has a viscosity index of 120 or more
   (C3) The mineral oil has a pour point of -10°C or lower (Method (α))
      a method (α) for preparing a liquid random copolymer of ethylene and α-olefin,
   comprising a step of carrying out solution polymerization of ethylene and α-olefin having 3 to 20 carbon atoms, under a catalyst system containing
   (a) a bridged metallocene compound represented by the following Formula 1 and
   (b) at least one compound selected from a group consisting of
      (i) an organoaluminum oxy-compound, and
      (ii) a compound which reacts with the bridged metallocene compound to form ion pairs.

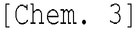

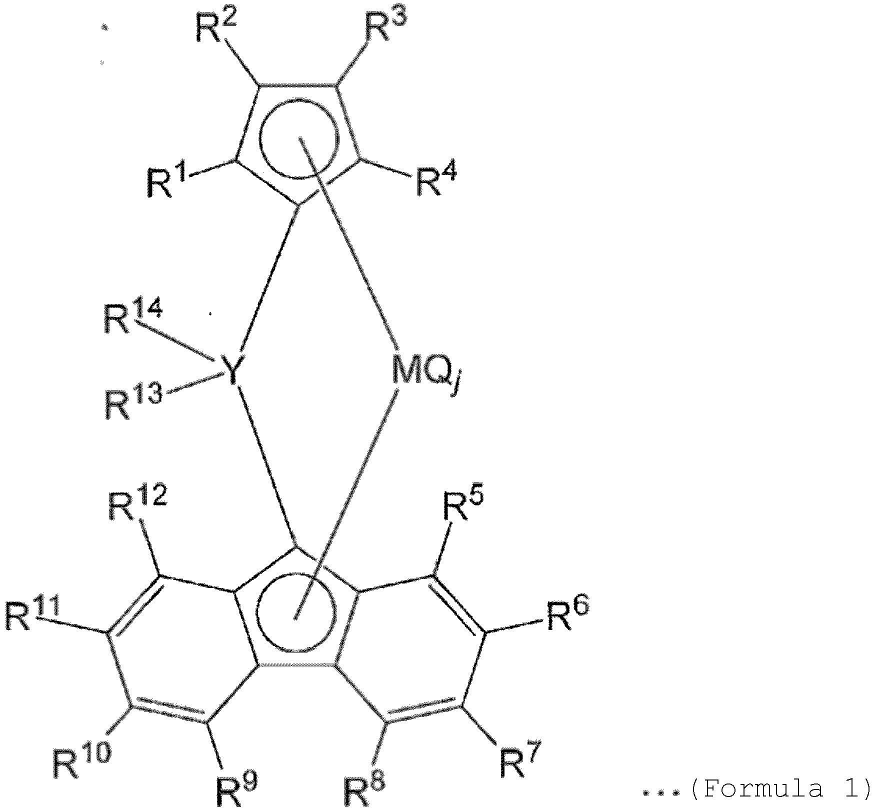

[In Formula 1, R¹, R², R³, R⁴, R⁵, R⁸, R⁹ and R¹² are respectively and independently hydrogen atom, hydrocarbon group or silicon-containing hydrocarbon group, and adjoining groups are optionally connected to each other to form a ring structure,
R⁶ and R¹¹, being the same, are hydrogen atom, hydrocarbon group or silicon-containing hydrocarbon group,
R⁷ and R¹⁰, being the same, are hydrogen atom, hydrocarbon group or silicon-containing hydrocarbon group,
R⁶ and R⁷ are optionally connected to hydrocarbon having 2 to 3 carbon atoms to form a ring structure,
R¹¹ and R¹⁰ are optionally connected to hydrocarbon having 2 to 3 carbon atoms to form a ring structure,
R⁶, R⁷, R¹⁰ and R¹¹ are not hydrogen atom at the same time;
Y is a carbon atom or silicon atom;
R¹³ and R¹⁴ are independently aryl groups;
M is Ti, Zr or Hf;
Q is independently halogen, hydrocarbon group, an anionic ligand or a neutral ligand which can be coordinated to a lone pair of electrons; and
j is an integer of 1 to 4.]

### Advantageous Effects of Invention

Because of excellent low-temperature viscosity properties and shear stability, and further thermal and oxidation stability, the lubricating oil composition of the present invention is excellent for such as energy conservation and resources saving, and it is suitably effective as an industrial lubricating oil, especially a lubricating oil for wind power generation.

### Description of Embodiments

### Liquid Random Copolymer (A)

The liquid random copolymer (A) of ethylene and α-olefin in the present invention (that is also described herein as "ethylene·α-olefin copolymer (A)") is prepared by the method (α) below:
(Method (α)) a method (α) for preparing a liquid random copolymer of ethylene and α-olefin, comprising a step of carrying out solution polymerization of ethylene and α-olefin having 3 to 20 carbon atoms, under a catalyst system containing
(a) a bridged metallocene compound represented by the following Formula 1 and
(b) at least one compound selected from a group consisting of
   (i) an organoaluminum oxy-compound, and
   (ii) a compound which reacts with the bridged metallocene compound to form ion pairs.

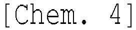

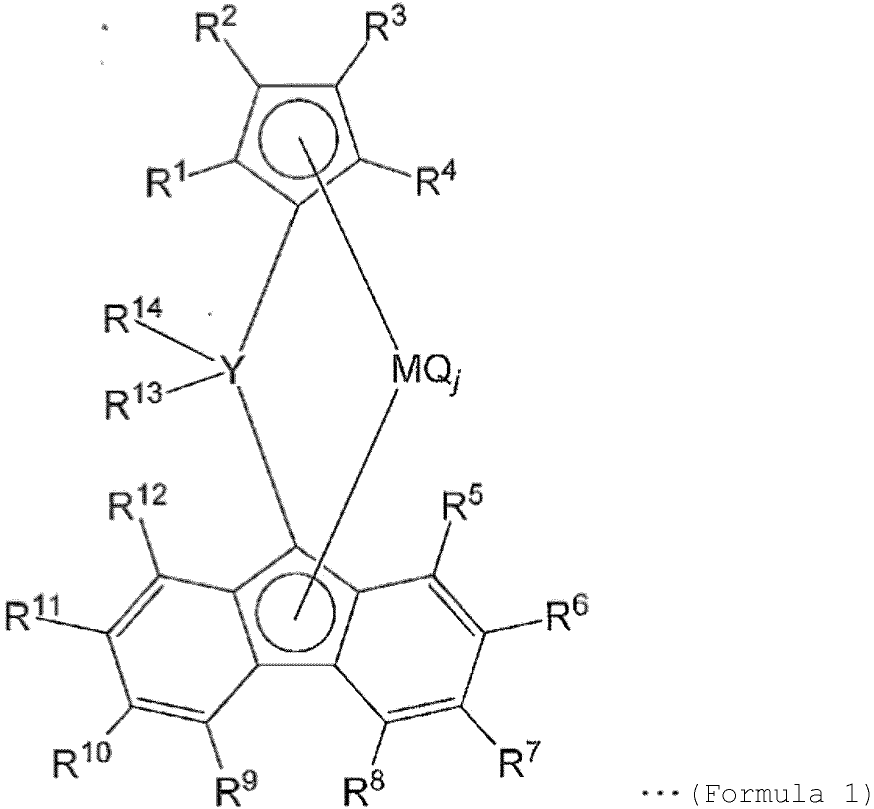

[In Formula 1, R¹, R², R³, R⁴, R⁵, R⁸, R⁹ and R¹² are respectively and independently hydrogen atom, hydrocarbon group or silicon-containing hydrocarbon group, and adjoining groups are optionally connected to each other to form a ring structure,
R⁶ and R¹¹, being the same, are hydrogen atom, hydrocarbon group or silicon-containing hydrocarbon group,
R⁷ and R¹⁰, being the same, are hydrogen atom, hydrocarbon group or silicon-containing hydrocarbon group,
R⁶ and R⁷ are optionally connected to hydrocarbon having 2 to 3 carbon atoms to form a ring structure,
R¹¹ and R¹⁰ are optionally connected to hydrocarbon having 2 to 3 carbon atoms to form a ring structure,
R⁶, R⁷, R¹⁰ and R¹¹ are not hydrogen atom at the same time;
Y is a carbon atom or silicon atom;
R¹³ and R¹⁴ are independently aryl groups;
M is Ti, Zr or Hf;
Q is independently halogen, hydrocarbon group, an anionic ligand or a neutral ligand which can be coordinated to a lone pair of electrons; and
j is an integer of 1 to 4.]

Here, the hydrocarbon group has 1 to 20 carbon atoms, preferably 1 to 15 atoms, and more preferably 4 to 10 carbon atoms, and means for example an alkyl group, aryl group etc. The aryl group has 6 to 20 carbon atoms, and preferably 6 to 15 carbon atoms.

Examples of the silicon-containing hydrocarbon group include an alkyl or aryl group having 3 to 20 carbon atoms which contains 1 to 4 silicon atoms, and in more detail includes trimethylsilyl group, tert-butyldimethylsilyl group, triphenylsilyl group etc.

In the bridged metallocene compound represented by Formula 1, cyclopentadienyl group may be substituted or unsubstituted.

In the bridged metallocene compound represented by Formula 1,
(i) it is preferable that at least one among substituents (R¹, R², R³ and R⁴) bonded to cyclopentadienyl group is a hydrocarbon group,
(ii) it is more preferable that at least one among substituents (R¹, R², R³ and R⁴) is a hydrocarbon group having 4 or more carbon atoms,
(iii) it is most preferable that substituent (R² or R³) bonded to the 3-position of the cyclopentadienyl group is a hydrocarbon group having 4 or more carbon atoms (for example an n-butyl group).

In case where at least two among R¹, R², R³ and R⁴ are substituents (that is, being not hydrogen atom), the above-mentioned substituents may be the same or be different, and it is preferable that at least one substituent is a hydrocarbon group having 4 or more carbon atoms.

In the metallocene compound represented by Formula 1, R⁶ and R¹¹ bonded to fluorenyl group are the same, R⁷ and R¹⁰ are the same, but R⁶, R⁷, R¹⁰ and R¹¹ are not hydrogen atom at the same time. In high-temperature solution polymerization of poly-α-olefin, in order to improve the polymerization activity, preferably neither R⁶ nor R¹¹ is hydrogen atom, and more preferably none of R⁶, R⁷, R¹⁰ and R¹¹ is hydrogen atom. For example, R⁶ and R¹¹ bonded to the 2-position and 7-position of the fluorenyl group are the same hydrocarbon group having 1 to 20 carbon atoms, and preferably all tert-butyl groups, and R⁷ and R¹⁰ are the same hydrocarbon group having 1 to 20 carbon atoms, and preferably all tert-butyl groups.

The main chain part (bonding part, Y) connecting the cyclopentadienyl group and the fluorenyl group is a cross-linking section of two covalent bonds comprising one carbon atom or silicon atom, as a structural bridge section imparting steric rigidity to the bridged metallocene compound represented by Formula 1. Cross-linking atom (Y) in the cross-linking section has two aryl groups (R¹³ and R¹⁴) which may be the same or different. Therefore, the cyclopentadienyl group and the fluorenyl group are bonded by the covalent bond cross-linking section containing an aryl group. Examples of the aryl group include a phenyl group, naphthyl group, anthracenyl group, and a substituted aryl group (which is formed by substituting one or more aromatic hydrogen (sp²-type hydrogen) of a phenyl group, naphthyl group or anthracenyl group, with substituents). Examples of substituents in the aryl group include a hydrocarbon group having 1 to 20 carbon atoms, a silicon-containing hydrocarbon group having 1 to 20 carbon atoms, a halogen atom etc., and preferably include a phenyl group. In the bridged metallocene compound represented by Formula 1, preferably R¹³ and R¹⁴ are the same in view of easy production.

In the bridged metallocene compound represented by Formula 1, Q is preferably a halogen atom or hydrocarbon group having 1 to 10 carbon atoms. The halogen atom includes fluorine, chlorine, bromine or iodine. The hydrocarbon group having 1 to 10 carbon atoms includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexyl methyl, cyclohexyl, 1-methyl-1-cyclohexyl etc. Further, when j is an integer of 2 or more, Q may be the same or different.

Examples of such bridged metallocene compounds (a) include:
ethylene [η⁵-(3-tert-butyl-5-methyl cyclopentadienyl)] (η⁵-fluorenyl) zirconium dichloride, ethylene [η⁵-(3-tert-butyl-5-methyl cyclopentadienyl)] [η⁵-(3,6-di-tert-butyl fluorenyl)] zirconium dichloride, ethylene [η⁵-(3-tert-butyl-5-methyl cyclopentadienyl)] [η⁵-(2,7-di-tert-butyl fluorenyl)] zirconium dichloride, ethylene [η⁵-(3-tert-butyl-5-methyl cyclopentadienyl)] (octamethyl octahydrodibenzfluorenyl) zirconium dichloride, ethylene [η⁵-(3-tert-butyl-5-methyl cyclopentadienyl)] (benzofluorenyl) zirconium dichloride, ethylene [η⁵-(3-tert-butyl-5-methyl cyclopentadienyl)] (dibenzofluorenyl) zirconium dichloride, ethylene [η⁵-(3-tert-butyl-5-methyl cyclopentadienyl)] (octahydrodibenzofluorenyl) zirconium dichloride, ethylene [η⁵-(3-tert-butyl-5-methyl cyclopentadienyl)] [η⁵-(2,7-diphenyl-3,6-di-tert-butyl fluorenyl)] zirconium dichloride, ethylene [η⁵-(3-tert-butyl-5-methyl cyclopentadienyl)] [η⁵-(2,7-dimethyl-3,6-di-tert-butyl fluorenyl)] zirconium dichloride;
ethylene [η⁵-(3-tert-butyl cyclopentadienyl)] (η⁵-fluorenyl) zirconium dichloride, ethylene [η⁵-(3-tert-butyl cyclopentadienyl)] [η⁵-(3,6-di-tert-butyl fluorenyl)] zirconium dichloride, ethylene [η⁵-(3-tert-butyl cyclopentadienyl)] [η⁵-(2,7-di-tert-butyl fluorenyl)] zirconium dichloride, ethylene [η⁵-(3-tert-butyl cyclopentadienyl)] (octamethyl octahydrodibenzfluorenyl) zirconium dichloride, ethylene [η⁵-(3-tert-butyl cyclopentadienyl)] (benzofluorenyl) zirconium dichloride, ethylene [η⁵-(3-tert-butyl cyclopentadienyl)] (dibenzofluorenyl) zirconium dichloride, ethylene [η⁵-(3-tert-butyl cyclopentadienyl)] (octahydrodibenzofluorenyl) zirconium dichloride, ethylene [η⁵-(3-tert-butyl cyclopentadienyl)] [η⁵-(2,7-diphenyl-3,6-di-tert-butyl fluorenyl)] zirconium dichloride, ethylene [η⁵-(3-tert-butyl cyclopentadienyl)] [η⁵-(2,7-dimethyl-3,6-di-tert-butyl fluorenyl)] zirconium dichloride;
ethylene [η⁵-(3-n-butyl cyclopentadienyl)] (η⁵-fluorenyl) zirconium dichloride, ethylene [η⁵-(3-n-butyl cyclopentadienyl)] [η⁵-(3,6-di-tert-butyl fluorenyl)] zirconium dichloride, ethylene [η⁵-(3-n-butyl cyclopentadienyl)] [η⁵-(2,7-di-tert-butyl fluorenyl)] zirconium dichloride, ethylene [η⁵-(3-n-butyl cyclopentadienyl)] (octamethyl octahydrodibenzfluorenyl) zirconium dichloride, ethylene [η⁵-(3-n-butyl cyclopentadienyl)] (benzofluorenyl) zirconium dichloride, ethylene [η⁵-(3-n-butyl cyclopentadienyl)] (dibenzofluorenyl) zirconium dichloride, ethylene [η⁵-(3-n-butyl cyclopentadienyl)] (octahydrodibenzofluorenyl) zirconium dichloride, ethylene [η⁵-(3-n-butyl cyclopentadienyl)] [η⁵-(2,7-diphenyl-3,6-di-tert-butyl fluorenyl)] zirconium dichloride, ethylene [η⁵-(3-n-butyl cyclopentadienyl)] [η⁵-(2,7-dimethyl-3,6-di-tert-butyl fluorenyl)] zirconium dichloride;
diphenylmethylene [η⁵-(3-tert-butyl-5-methyl cyclopentadienyl)] (η⁵-fluorenyl) zirconium dichloride, diphenylmethylene [η⁵-(3-tert-butyl-5-methyl cyclopentadienyl)] [η⁵-(3,6-di-tert-butyl fluorenyl)] zirconium dichloride, diphenylmethylene [η⁵-(3-tert-butyl-5-methyl cyclopentadienyl)] [η⁵-(2,7-di-tert-butyl fluorenyl)] zirconium dichloride, diphenylmethylene [η⁵-(3-tert-butyl-5-methyl cyclopentadienyl)] (octamethyl octahydrodibenzfluorenyl) zirconium dichloride, diphenylmethylene [η⁵-(3-tert-butyl-5-methyl cyclopentadienyl)] (benzofluorenyl) zirconium dichloride, diphenylmethylene [η⁵-(3-tert-butyl-5-methyl cyclopentadienyl)] (dibenzofluorenyl) zirconium dichloride, diphenylmethylene [η⁵-(3-tert-butyl-5-methyl cyclopentadienyl)] (octahydrodibenzofluorenyl) zirconium dichloride, diphenylmethylene [η⁵-(3-tert-butyl-5-methyl cyclopentadienyl)] [η⁵-(2,7-diphenyl-3,6-di-tert-butyl fluorenyl)] zirconium dichloride, diphenylmethylene [η⁵-(3-tert-butyl-5-methyl cyclopentadienyl)] [η⁵-(2,7-dimethyl-3,6-di-tert-butyl fluorenyl)] zirconium dichloride;
diphenylmethylene [η⁵-(3-tert-butyl cyclopentadienyl)] (η⁵-fluorenyl) zirconium dichloride, diphenylmethylene [η⁵-(3-tert-butyl cyclopentadienyl)] [η⁵-(3,6-di-tert-butyl fluorenyl)] zirconium dichloride, diphenylmethylene [η⁵-(3-tert-butyl cyclopentadienyl)] [η⁵-(2,7-di-tert-butyl fluorenyl)] zirconium dichloride, diphenylmethylene [η⁵-(3-tert-butyl cyclopentadienyl)] (octamethyl octahydrodibenzfluorenyl) zirconium dichloride, diphenylmethylene [η⁵-(3-tert-butyl cyclopentadienyl)] (benzofluorenyl) zirconium dichloride, diphenylmethylene [η⁵-(3-tert-butyl cyclopentadienyl)] (dibenzofluorenyl) zirconium dichloride, diphenylmethylene [η⁵-(3-tert-butyl cyclopentadienyl)] (octahydrodibenzofluorenyl) zirconium dichloride, diphenylmethylene [η⁵-(3-tert-butyl cyclopentadienyl)] [η⁵-(2,7-diphenyl-3,6-di-tert-butyl fluorenyl)] zirconium dichloride, diphenylmethylene [η⁵-(3-tert-butyl cyclopentadienyl)] [η⁵-(2,7-dimethyl-3,6-di-tert-butyl fluorenyl)] zirconium dichloride;
diphenylmethylene [η⁵-(3-n-butyl cyclopentadienyl)] (η⁵-fluorenyl) zirconium dichloride, diphenylmethylene [η⁵-(3-n-butyl cyclopentadienyl)] [η⁵-(3,6-di-tert-butyl fluorenyl)] zirconium dichloride, diphenylmethylene [η⁵-(3-n-butyl cyclopentadienyl)] [η⁵-(2,7-di-tert-butyl fluorenyl)] zirconium dichloride, diphenylmethylene [η⁵-(3-n-butyl cyclopentadienyl)] (octamethyl octahydrodibenzfluorenyl) zirconium dichloride, diphenylmethylene [η⁵-(3-n-butyl cyclopentadienyl)] (benzofluorenyl) zirconium dichloride, diphenylmethylene [η⁵-(3-n-butyl cyclopentadienyl)] (dibenzofluorenyl) zirconium dichloride, diphenylmethylene [η⁵-(3-n-butyl cyclopentadienyl)] (octahydrodibenzofluorenyl) zirconium dichloride, diphenylmethylene [η⁵-(3-n-butyl cyclopentadienyl)] [η⁵-(2,7-diphenyl-3,6-di-tert-butyl fluorenyl)] zirconium dichloride, diphenylmethylene [η⁵-(3-n-butyl cyclopentadienyl)] [η⁵-(2,7-dimethyl-3,6-di-tert-butyl fluorenyl)] zirconium dichloride;
di(p-tolyl) methylene [η⁵-(3-tert-butyl-5-methyl cyclopentadienyl)] (η⁵-fluorenyl) zirconium dichloride, di(p-tolyl) methylene [η⁵-(3-tert-butyl-5-methyl cyclopentadienyl)] [η⁵-(3,6-di-tert-butyl fluorenyl)] zirconium dichloride, di(p-tolyl) methylene [η⁵-(3-tert-butyl-5-methyl cyclopentadienyl)] [η⁵-(2,7-di-tert-butyl fluorenyl)] zirconium dichloride, di(p-tolyl) methylene [η⁵-(3-tert-butyl-5-methyl cyclopentadienyl)] (octamethyl octahydrodibenzfluorenyl) zirconium dichloride, di(p-tolyl) methylene [η⁵-(3-tert-butyl-5-methyl cyclopentadienyl)] (benzofluorenyl) zirconium dichloride, di(p-tolyl) methylene [η⁵-(3-tert-butyl-5-methyl cyclopentadienyl)] (dibenzofluorenyl) zirconium dichloride, di(p-tolyl) methylene [η⁵-(3-tert-butyl-5-methyl cyclopentadienyl)] (octahydrodibenzofluorenyl) zirconium dichloride, di(p-tolyl) methylene [η⁵-(3-tert-butyl-5-methyl cyclopentadienyl)] [η⁵-(2,7-diphenyl-3,6-di-tert-butyl fluorenyl)] zirconium dichloride, di(p-tolyl) methylene [η⁵-(3-tert-butyl-5-methyl cyclopentadienyl)] [η⁵-(2,7-dimethyl-3,6-di-tert-butyl fluorenyl)] zirconium dichloride;
di(p-tolyl) methylene [η⁵-(3-tert-butyl cyclopentadienyl)] (η⁵-fluorenyl) zirconium dichloride, di(p-tolyl) methylene [η⁵-(3-tert-butyl cyclopentadienyl)] [η⁵-(3,6-di-tert-butyl fluorenyl)] zirconium dichloride, di(p-tolyl) methylene [η⁵-(3-tert-butyl cyclopentadienyl)] [η⁵-(2,7-di-tert-butyl fluorenyl)] zirconium dichloride, di(p-tolyl) methylene [η⁵-(3-tert-butyl cyclopentadienyl)] (octamethyl octahydrodibenzfluorenyl) zirconium dichloride, di(p-tolyl) methylene [η⁵-(3-tert-butyl cyclopentadienyl)] (benzofluorenyl) zirconium dichloride, di(p-tolyl) methylene [η⁵-(3-tert-butyl cyclopentadienyl)] (dibenzofluorenyl) zirconium dichloride, di(p-tolyl) methylene [η⁵-(3-tert-butyl cyclopentadienyl)] (octahydrodibenzofluorenyl) zirconium dichloride, di(p-tolyl) methylene [η⁵-(3-tert-butyl cyclopentadienyl)] [η⁵-(2,7-diphenyl-3,6-di-tert-butyl fluorenyl)] zirconium dichloride, di(p-tolyl) methylene [η⁵-(3-tert-butyl cyclopentadienyl)] [η⁵-(2,7-dimethyl-3,6-di-tert-butyl fluorenyl)] zirconium dichloride; and
di(p-tolyl) methylene [η⁵-(3-n-butyl cyclopentadienyl)] (η⁵-fluorenyl) zirconium dichloride, di(p-tolyl) methylene [η⁵-(3-n-butyl cyclopentadienyl)] [η⁵-(3,6-di-tert-butyl fluorenyl)] zirconium dichloride, di(p-tolyl) methylene [η⁵-(3-n-butyl cyclopentadienyl)] [η⁵-(2,7-di-tert-butyl fluorenyl)] zirconium dichloride, di(p-tolyl) methylene [η⁵-(3-n-butyl cyclopentadienyl)] (octamethyl octahydrodibenzfluorenyl) zirconium dichloride, di(p-tolyl) methylene [η⁵-(3-n-butyl cyclopentadienyl)] (benzofluorenyl) zirconium dichloride, di(p-tolyl) methylene [η⁵-(3-n-butyl cyclopentadienyl)] (dibenzofluorenyl) zirconium dichloride, di(p-tolyl) methylene [η⁵-(3-n-butyl cyclopentadienyl)] (octahydrodibenzofluorenyl) zirconium dichloride, di(p-tolyl) methylene [η⁵-(3-n-butyl cyclopentadienyl)] [η⁵-(2,7-diphenyl-3,6-di-tert-butyl fluorenyl) zirconium dichloride, di(p-tolyl) methylene [η⁵-(3-n-butyl cyclopentadienyl)] [η⁵-(2,7-dimethyl-3,6-di-tert-butyl fluorenyl)] zirconium dichloride.

Although compounds whose zirconium atoms were substituted with hafnium atoms, or compounds whose chloro ligands were substituted with methyl groups etc. are exemplified in these compounds, the bridged metallocene compound (a) is not limited to these exemplifications.

As the organoaluminum oxy-compound used in the catalyst system according to the present invention, conventional aluminoxane can be used. For example, linear or ring type aluminoxane represented by the following Formulas 2 to 5 can be used. A small amount of organic aluminum compound may be contained in the organoaluminum oxy-compound. 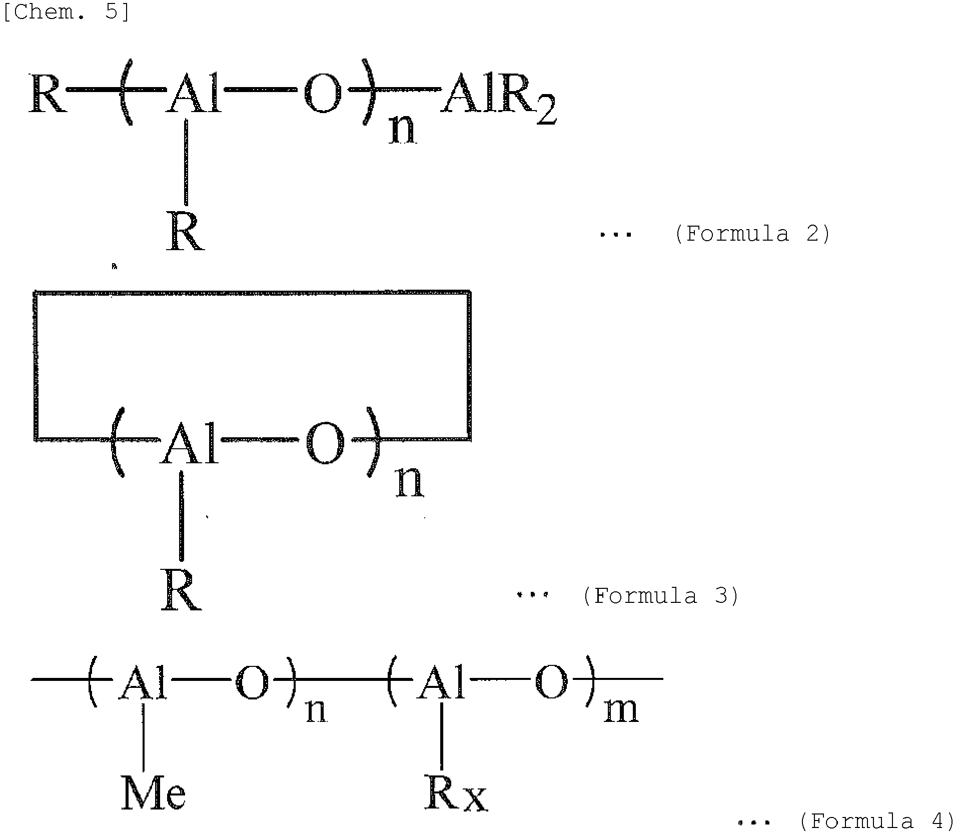 In Formulae 2 to 4, R is independently a hydrocarbon group having 1 to 10 carbon atoms, Rx is independently a hydrocarbon group having 2 to 20 carbon atoms, m and n are independently an integer of 2 or more, preferably 3 or more, more preferably 10 to 70, and most preferably 10 to 50. 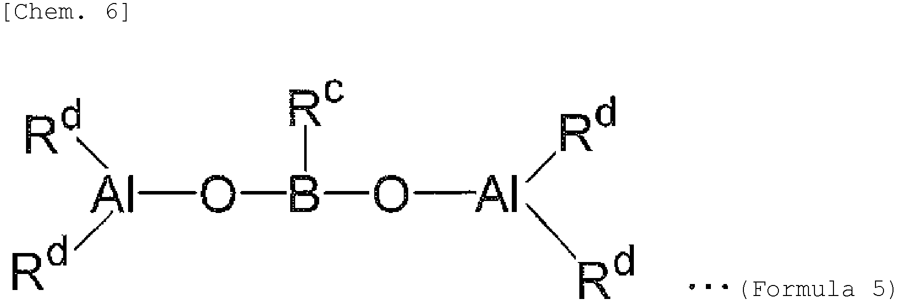 In Formula 5, R^{c} is a hydrocarbon group having 1 to 10 carbon atoms, and R^{d} is independently a hydrogen atom, halogen atom or hydrocarbon group having 1 to 10 carbon atoms.

In Formula 2 or Formula 3, R is a methyl group (Me) of the organoaluminum oxy-compound which is conventionally referred to as "methylaluminoxane".

The methylaluminoxane is easily available and has high polymerization activity, and thus it is commonly used as an activator in the polyolefin polymerization. However, the methylaluminoxane is difficult to dissolve in a saturated hydrocarbon, and thus it has been used as a solution of aromatic hydrocarbon such as toluene or benzene, which is environmentally undesirable. Therefore, in recent years, a flexible body of methylaluminoxane represented by Formula 4 has been developed and used as an aluminoxane dissolved in the saturated hydrocarbon. The modified methylaluminoxane represented by Formula 4 is prepared by using a trimethyl aluminum and an alkyl aluminum other than the trimethyl aluminum as shown in US Patent 4960878 and US Patent 5041584, and for example, is prepared by using trimethyl aluminum and triisobutyl aluminum. The aluminoxane in which Rx is an isobutyl group is commercially available under the trade name of MMAO and TMAO, in the form of a saturated hydrocarbon solution. (See Tosoh Finechem Corporation, Tosoh Research & Technology Review, Vol 47, 55 (2003)).

As (ii) the compound which reacts with the bridged metallocene compound to form ion pairs (hereinafter, referred to as "ionic compound" as required) which is contained in the present catalyst system, a Lewis acid, ionic compounds, borane, borane compounds and carborane compounds can be used. These are described in Korean Patent No. 10-551147, Japanese Unexamined Publication H01-501950, Japanese Unexamined Publication H03-179005, Japanese Unexamined Publication H03-179006, Japanese Unexamined Publication H03-207703, Japanese Unexamined Publication H03-207704, USP 5321106 and so on. If needed, heteropoly compounds, and isopoly compound etc. can be used, and the ionic compound disclosed in Japanese Unexamined Publication 2004-051676 can be used. The ionic compound may be used alone or by mixing two or more. In more detail, examples of the Lewis acid include the compound represented by BR₃ (R is fluoride, substituted or unsubstituted alkyl group having 1 to 20 carbon atoms (methyl group, etc.), substituted or unsubstituted aryl group having 6 to 20 carbon atoms (phenyl group, etc.), and also includes for example, trifluoro boron, triphenyl boron, tris(4-fluorophenyl) boron, tris(3,5-difluorophenyl) boron, tris(4-fluorophenyl) boron, tris(pentafluorophenyl) and boron tris(p-tolyl) boron. When the ionic compound is used, its use amount and sludge amount produced are relatively small in comparison with the organoaluminum oxy-compound, and thus it is economically advantageous. In the present invention, it is preferable that the compound represented by the following Formula 6 is used as the ionic compound. 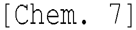 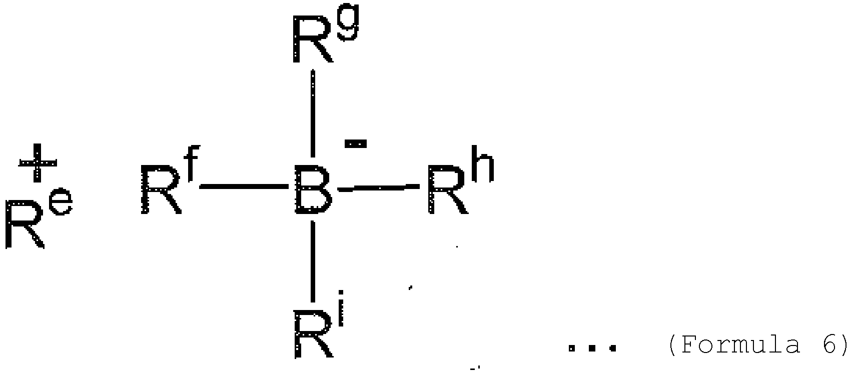 In Formula 6, R^{e+} is H+, a carbenium cation, an oxonium cation, an ammonium cation, a phosphonium cation, a cycloheptyltrienyl cation, or a ferrocenium cation having a transition metal, and R^{f} to Rⁱ each is independently an organic group, preferably a hydrocarbon group having 1 to 20 carbon atoms, and more preferably an aryl group, for example, a pentafluorophenyl group. Examples of the carbenium cation include a tris(methylphenyl)carbenium cation and a tris(dimethylphenyl)carbenium cation, and examples of the ammonium cation include a dimethylanilinium cation.

Examples of compounds represented by the aforementioned Formula 6 preferably include N,N-dialkyl anilinium salts, and specifically include N,N-dimethylanilinium tetraphenylborate, N,N-dimethylanilinium tetrakis (pentafluorophenyl) borate, N,N-dimethylanilinium tetrakis (3,5-ditrifluoro methylphenyl) borate, N,N-diethyl anilinium tetraphenylborate, N,N-diethyl anilinium tetrakis (pentafluorophenyl) borate, N,N-diethyl anilinium tetrakis (3,5-ditrifluoro methylphenyl) borate, N,N-2,4,6-penta methylanilinium tetraphenylborate, and N,N-2,4,6-penta methylanilinium tetrakis (pentafluorophenyl) borate.

The catalyst system used in the present invention further includes a (c) organoaluminum compound when it is needed. The organoaluminum compound plays a role of activating the bridged metallocene compound, the organoaluminum oxy-compound, and the ionic compound, etc. As the organoaluminum compound, preferably an organoaluminum represented by the following Formula 7, and alkyl complex compounds of the Group 1 metal and aluminum represented by the following Formula 8 can be used.

R^{a}ₘAl(OR^{b})ₙHₚX_{q} ... Formula 7

In Formula 7, R^{a} and R^{b} each is independently a hydrocarbon group having 1 to 15 carbon atoms, preferably 1 to 4 carbon atoms, and X is a halogen atom, m is an integer of 0<m≤3, n is an integer of 0≤n≤3, p is an integer of 0<p≤3, q is an integer of 0≤q<3, and m+n+p+q=3.

M²AlR^{a}₄ ... Formula 8

In Formula 8, M² represents Li, Na or K, and R^{a} is a hydrocarbon group having 1 to 15 carbon atoms, and preferably 1 to 4 carbon atoms.

Examples of the organoaluminum compound represented by Formula 7 include trimethyl aluminum and triisobutyl aluminum etc., which are easily available. Examples of the alkyl complex compounds of Group 1 metal and aluminum represented by Formula 8 include LiAl(C₂H₅)₄, LiAl(C₇H₁₅)₄ etc. Compounds similar to the compounds represented by Formula 7 can be used. For example, like (C₂H₅)₂AlN(C₂H₅)Al(C₂H₅)₂, an organoaluminum compound to which at least 2 aluminum compounds are bonded through nitrogen atoms, can be used.

In the method for preparing the ethylene-α-olefin copolymer (A), the amount of (a) bridged metallocene compound represented by Formula 1 is preferably 5 to 50 weight% with respect to total catalyst composition. Moreover, preferably the amount of (b) (i) organoaluminum oxy-compound is 50 to 500 equivalent weight with respect to the molar number of the bridged metallocene compound to be used, the amount of (b) (ii) the compound which reacts with the bridged metallocene compound to form ion pairs is 1 to 5 equivalent weight with respect to the molar number of bridged metallocene compound to be used, and the amount of (c) organoaluminum compound is 5 to 100 equivalent weight with respect to the molar number of the bridged metallocene compound to be used.

The catalyst system used in the present invention may have the following [1] to [4] for example.
[1] (a) bridged metallocene compound represented by Formula 1, and (b) (i) organoaluminum oxy-compound.
[2] (a) bridged metallocene compound represented by Formula 1, (b) (i) organoaluminum oxy-compound and (c) organoaluminum compound.
[3] (a) bridged metallocene compound represented by Formula 1, (b) (ii) the compound which reacts with the bridged metallocene compound to form ion pairs, and (c) organoaluminum compound.
[4] (a) bridged metallocene compound represented by Formula 1, and (b) (i) organoaluminum oxy-compound and (ii) the compound which reacts with the bridged metallocene compound to form ion pairs.

The (a) bridged metallocene compound represented by Formula 1 (element (a)), (b) (i) organoaluminum oxy-compound (element (b)), (ii) compound which reacts with the bridged metallocene compound to form ion pairs and/or (c) organoaluminum compound (element (c)) may be introduced in any order, to a starting raw material monomer (a mixture of ethylene and α-olefin having 3 to 20 carbon atoms). For example, elements (a), (b) and/or (c) are introduced alone or in any order, to a polymerization reactor with which raw material monomer is filled. Alternatively, if required, at least two elements among (a), (b) and/or (c) are mixed and then the mixed catalyst composition is introduced to the polymerization reactor with which raw material monomer is filled.

The ethylene-α-olefin copolymer (A) is prepared by a solution polymerization of ethylene and α-olefin having 3 to 20 carbon atoms under the catalyst system. As the α-olefin having 3 to 20 carbon atoms, one or more among linear α-olefins such as propylene, 1-butene, 1-penetene, 1-hexene etc., branched α-olefins such as isobutylene, 3-methyl-1-butene, 4-methyl-1-penetene etc. and mixtures thereof can be used. Preferably, one or more α-olefins having 3 to 6 carbon atoms can be used, and more preferably, propylene can be used. The solution polymerization can be carried out by using an inert solvent such as propane, butane or hexane etc. or an olefin monomer itself as a medium. In the copolymerization of ethylene and α-olefin of the present invention, the temperature for the copolymerization is conventionally 80 to 150°C and preferably 90 to 120°C, and the pressure for the copolymerization is conventionally atmospheric pressure to 500 kgf/cm² and preferably atmospheric pressure to 50 kgf/cm², which can vary in accordance with reacting materials, reacting conditions, etc.

Batch-, semi-continuous- or continuous-type polymerization can be carried out, and continuous-type polymerization is preferably carried out.

The ethylene-α-olefin copolymer (A) is in liquid phase at room temperature, where the α-olefin unit has a structure of being uniformly distributed in the copolymer chain. The ethylene-α-olefin copolymer (A) comprises e.g. 60 to 40 mol% and preferably 45 to 55 mol% of ethylene units derived from ethylene, and further comprises e.g. 40 to 60 mol% and preferably 45 to 55 mol% of α-olefin units having 3 to 20 carbon atoms which are derived from α-olefin having 3 to 20 carbon atoms.

The number average molecular weight (Mn) of the ethylene-α-olefin copolymer (A) is e.g. 500 to 10,000 and preferably 800 to 6,000, and the molecular weight distribution (Mw/Mn, Mw is weight average molecular weight) is e.g. 3 or less and preferably 2 or less. The number average molecular weight (Mn) and the molecular weight distribution (Mw/Mn) are measured by gel permeation chromatography (GPC).

The ethylene-α-olefin copolymer (A) has a kinematic viscosity at 100°C of e.g. 30 to 5,000 and preferably 50 to 3,000 mm²/s, a pour point of e.g. 30 to -45°C and preferably 20 to -35°C, and a Bromine Number of 0.1 / 100 g or less.

In the bridged metallocene compound represented by Formula 1, the polymerization activity is particularly high with respect to the copolymerization of ethylene with α-olefin. Utilizing this bridged metallocene compound selectively stops polymerization by hydrogen introduction at the molecular terminals, and thus there is little unsaturated bonding of the resulting ethylene-α-olefin copolymer (A). Moreover, since the ethylene-α-olefin copolymer (A) has a high random copolymerization, it has a controlled molecular weight distribution, and thus has excellent shear stability and viscosity properties.

Thus, the lubricating oil composition containing the ethylene-α-olefin copolymer used in the present invention has an excellent balance of viscosity properties and shear stability, and further has excellent durability and thermal and oxidation stability.

Lubricating Oil Base

The lubricating oil base used in the present invention is usually utilized after a purification step such as dewaxing, and there are several grades in the manner of purification. The grades used herein is defined by API (American Petroleum Institute) classification. The properties of the lubricating oil base classified in each group are shown in Table 1.

**[Table 1]**

| Group | Type | Viscosity Index *1 | Content of Saturated Hydrocarbons *2 (vol%) | Content of Sulfur *3 (weight%) |
|---|---|---|---|---|
| (I)*4 | Mineral Oil | 80 to 120 | <90 | > 0.03 |
| (II) | Mineral Oil | 80 to 120 | ≥ 90 | ≤ 0.03 |
| (III) | Mineral Oil | ≥ 120 | ≥ 90 | ≤ 0.03 |
| (IV) | Poly-α-olefin | | | |
| (V) | Lubricating oil bases other than those described above | | | |

| | | | | |
|---|---|---|---|---|
| *1: Measured in accordance with ASTM D445 (JIS K2283) *2: Measured in accordance with ASTM D3238 *3: Measured in accordance with ASTM D4294 (JIS K2541) *4: Mineral oils, whose saturated hydrocarbon content is less than 90 (vol%) and sulfur content is less than 0.03% by weight, or whose saturated hydrocarbon content is 90 (vol%) or more and sulfur content exceeds 0.03% by weight are included in the Group (I) | | | | |

Poly α-olefin belonging to the Group (IV) in Table 1 is a hydrocarbon polymer obtained by polymerizing an α-olefin having 8 or more carbon atoms as at least a source monomer, and examples include such as polydecene obtained by polymerizing decene-1. Such an α-olefin oligomer can be prepared by cationic polymerization, thermal polymerization or free radical polymerization using a Ziegler catalyst or Lewis acid as a catalysts.

Examples of the lubricating oil bases belonging to the Group (V) in Table 1 include alkylbenzenes, alkylnaphthalenes and ester oils.

Most of the alkyl benzenes and alkyl naphthalenes are usually dialkyl benzene or dialkyl naphthalene whose alkyl chain length has 6 to 14 carbon atoms, where such alkyl benzenes or alkyl naphthalenes are produced by the Friedel-Crafts alkylation reaction of benzene or naphthalene with olefin. In the production of alkyl benzenes or alkyl naphthalenes, the alkylated olefin to be utilized may be a linear or branched olefin, or may be a combination of these. These production processes are described in e.g. US Patent 3909432.

Examples of ester oils include monoesters prepared from a monobasic acid and alcohol; diesters prepared from dibasic acid and alcohol, or from a diol with a monobasic acid or an acid mixture; or polyolesters prepared by reacting a monobasic acid or an acid mixture with a diol, triol (e.g., trimethylolpropane), tetraol, (e.g., pentaerythritol), hexol (e.g., dipentaerythritol) etc. Examples of these esters include tridecyl pelargonate, di-2-ethyl hexyl adipate, di-2-ethyl hexyl azelate, trimethylolpropane triheptanoate, pentaerythritol tetraheptanoate.

The synthetic oil (B) according to the present invention is a lubricating oil base having the properties (B1) to (B3) below and belonging to the Groups (IV) or (V) according to the API quality classification, and among them, a poly α-olefin belonging to the Group (IV) is preferable. Furthermore, the synthetic oil (b) according to the present invention may also contain 20% by weight or less of a synthetic oil such as a polyol ester or a diester having similar kinetic viscosity and belonging to the Group (V).

(B1) The synthetic oil has a kinematic viscosity at 100°C of 2 to 20 mm²/s, preferably 4 to 10 mm²/s
(B2) The synthetic oil has a viscosity index of 120 or more, preferably 130 or more
(B3) The synthetic oil has a pour point of -30°C or lower, preferably -40°C or lower

In addition, the mineral oil (C) is a lubricating oil base having the properties of (C1) to (C3) below, and a lubricating oil base classified into the Group (III) in the API quality classification.

The lubricating oil base classified in the Group (III) is a lubricating oil base having high purification level due to such as hydrogenolysis method, and having a high viscosity index.

(C1) The mineral oil has a kinematic viscosity at 100°C of 2 to 10 mm²/s, preferably 4 to 8 mm²/s
(C2) The mineral oil has a viscosity index of 120 or more, preferably 125 or more
(C3) The mineral oil has a pour point of -10°C or lower, preferably -15°C or lower

The lubricating oil base in the present invention consists of one or more components selected from the synthetic oil (B) or the mineral oil (C), and may consist of one type or two or more types of only the synthetic oil (B), and of one type or two or more types of only the mineral oil (C), or may be prepared or may be prepared by mixing one type or two or more types of the synthetic oil(s) (B) and one type or two or more types of the mineral oil(s) (C).

In addition, each property described above was measured by the following methods.

(B1, C1) Measured in accordance with ASTM D445 (JIS K2283)
(B2, C2): Measured in accordance with ASTM D2270 (JIS K2283)
(B3, C3): Measured in accordance with ASTM D97 (JIS K2269)

### Lubricating Oil Composition

The lubricating oil composition in the present invention is a composition that comprises 10 to 70% by weight of a lubricating oil base consisting of one or more components selected from the synthetic oil (B) or the mineral oil (C), and 30 to 90% by weight of the ethylene-α-olefin copolymer (A) (note that the sum total of the components (A), (B) and (C) is 100% by weight). In addition, the lubricating oil composition in the present invention is preferably a composition comprising 40 to 80% by weight, more preferably 40 to 70% by weight of the ethylene-α-olefin copolymer (A).

Such a lubricating oil composition is characterized by having excellent shear stability, and it exhibits a good low-temperature property and shear stability by containing synthetic oils such as a poly α-olefin and/or mineral oils which is highly purified and has high-viscosity index as the lubricating oil base, and further has thermal and oxidation stability.

The lubricating oil composition in the present invention can, as required, mix additives such as pour point lowering agents, extreme pressure agents, friction modifying agents, oiliness agents, antioxidants, anti-foamers, anticorrosive agents, and corrosion preventing agents in, generally a ratio of 20 weight parts or less, for the sum total of 100 weight parts of the components of (A), (B), and (C). Among these additives, it is preferable to add extreme pressure agents and pour point lowering agents, (especially in the case containing 20% by weight or more of the mineral oil (C)) and it is more preferable to add10% by weight or less of two components, namely extreme pressure agents and pour point lowering agents), with respect to 100 weight parts of (A)+(B)+(C).

Here, additives used in combination as required are explained.

### Pour Point lowering agent

Examples of pour point lowering agents can include such as polymers or copolymers of alkyl methacrylate, polymers or copolymers of alkyl acrylate, polymers or copolymers of alkyl fumarate, polymers or copolymers of alkyl maleate, and alkyl aromatic-based compounds. Among these, a polymethacrylate-based pour point lowering agents that is a pour point lowering agents comprising polymers or copolymers of alkyl methacrylate is especially preferable, the carbon atoms of the alkyl group of the alkyl methacrylate are preferably 12 to 20, and the addition amount thereof is preferably 0.05 to 2 parts by weight with respect to the total 100 parts by weight of the components (A), (B) and (C). These can be obtained from those commercially available as pour point lowering agents. Examples of commercial brands include ACLUBE 146 and ACLUBE 136 made by Sanyo Chemical Industries, Ltd. and LUBRAN 141 and LUBRAN 171 made by TOHO Chemical Industry Co., Ltd.

### Extreme Pressure Agent

Examples of extreme pressure agents include sulfide oils and fats, olefin sulfide, sulfides, phosphate ester, phosphite ester, phosphate ester amine salt, and phosphite ester amine salt.

### Friction Modifying Agent

Examples of friction modifying agents include organic metal-based friction modifying agents, which are represented by organic molybdenum compounds such as molybdenum dithiophosphate and molybdenum dithiocarbamate.

Moreover, examples of oiliness agents include fatty acids, fatty acid esters, and higher alcohols, having alkyl groups of 8 to 22 carbon atoms.

### Antioxidant

Specific examples of antioxidant include phenol-based antioxidants such as 2,6-di-t-butyl-4-methylphenol; and amine-based antioxidants such as dioctyl diphenylamine. Examples of anti-foamers can include silicon-based anti-foamers such as dimethylsiloxane and silica gel dispersion; and alcohol- and an ester-based anti-foamers.

### Anticorrosive agent

Examples of anticorrosive agents include carboxylic acids, carboxylate salts, esters, and phosphoric acids. Examples of corrosion preventing agents can include benzotriazole and derivatives thereof, and thiazole-based compounds.

Moreover, examples of corrosion preventing agents include benzotriazole-based, thiadiazole-based, and imidazole-based compounds.

Because of especially having excellent shear stability and low-temperature viscosity properties, the lubricating oil composition in the present invention is effective as an industrial lubricating oil. Examples of industrial lubricating oils include those having the viscosity range of ISO 220 to ISO 680, and it is especially effective as oil for gears for wind power generation.

### EXAMPLES

The present invention is specifically explained based on the below Examples. Various physical properties in Examples were measured as explained below.

### • Ethylene content

Ethylene content was measured under the conditions of 120°C, pulse width of 45° pulse, and pulse repeating time of 5.5 seconds in a mixed solvent of ortho dichlorobenzene and benzene-d6 (ortho dichlorobenzene/benzene-d6 = 3/1 to 4/1 (volume ratio) using LA500 nuclear magnetic resonance apparatus made by JEOL Ltd.

### • B-value

Employing o-dichlorobenzene / benzene-d₆ (4/1 [vol/vol%]) as a measurement solvent, the ¹³C-NMR spectrum was measured under the measuring conditions (100 MHz, ECX 400P, made by JEOL Ltd) of temperature of 120°C, spectral width of 250 ppm, pulse repeating time of 5.5 seconds, and a pulse width of 4.7 µsec (45° pulse), or under the measuring conditions (125 MHz, AVANCE III Cryo-500 made by Bruker Biospin Inc) of temperature of 120°C, spectral width of 250 ppm, pulse repeating time of 5.5 seconds, and a pulse width of 5.0 µsec (45° pulse), and the B-value was calculated based on the following Formula [1]. 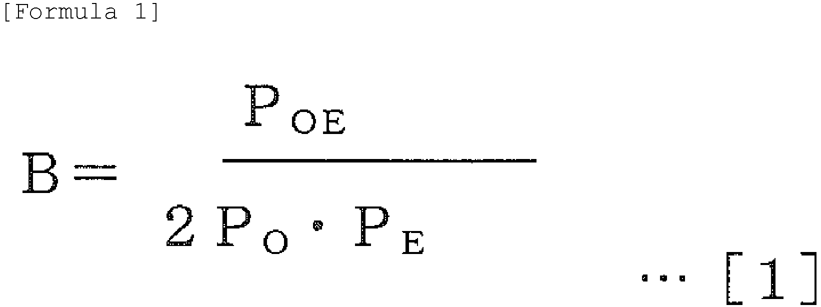 In Formula [1], P_{E} indicates the molar fraction contained in the ethylene component, Po indicates the molar fraction contained in the α-olefin component, and P_{OE} indicates the molar fraction of the ethylene-α-olefin sequences of all dyad sequences.

### • Kinematic viscosity (40°C, 100°C)

The measurements were performed according to ASTM D 445. In Examples, the viscosity of the compounding oil was adjusted as follows based on each ISO classification.

• ISO220: The kinematic viscosity (40°C) was adjusted to be 220+/-22 mm²/s by compounding.

• ISO320: The kinematic viscosity (40°C) was adjusted to be 320+/-32 mm²/s by compounding.

• ISO460: The kinematic viscosity (40°C) was adjusted to be 460+/-46 mm²/s by compounding.

Weight average molecular weight (Mw), Molecular weight distribution (Mw/Mn)

Weight average molecular weight (Mw) and molecular weight distribution (Mw/Mn) were measured at 140°C in ortho dichlorobenzene solvent using GPC (gel permeation chromatography).

### • Low-temperature viscosity (-30°C)

Measurement was performed according to ASTM D341 using BF (Brookfield) viscometer.

### • Viscosity index

The viscosity index was measured and calculated by the method described in JIS K2283.

### • Shear stability (viscosity decreasing ratio %)

Tests were performed according to CEC-L-45 (CEC: The Coordinating European Council, the management institute of test methods for automobile fuel and lubricating oil in Europe) using KRL shear tester, and viscosity decreasing ratio at 40°C was assessed.

Shear stability is a measure of kinematic viscosity loss by copolymeric components of the lubricating oil sheared at the metal slide portion with molecular chains being cut.

### • Micro-pitching failure-load stage

The load is increased from state 5 to 10 stepwise, micro-pitching generation area on gear tooth flank is expressed in % on each load stage, and weight loss on whole gear is also measured by FVA-54 micro-pitching tester according to the standard of Flender GmbH. (rotation speed: 1500 rpm, temperature: 90°C)

### • Thermal and oxidation stability

The thermal and oxidation stability was based on the method of stability test for acid number of lubricating oil for internal combustion engine described in JIS K2514, and lacquer level 72 hours after the test time was assessed.

### [Polymerization Example 1]

760 ml of heptane and 120 g of propylene were charged into a stainless steel autoclave with a volume of 2 L sufficiently substituted with nitrogen, and the temperature in the system was raised to 150°C, and then 0.85 MPa of hydrogen and 0.19 MPa of ethylene were supplied to raise the total pressure to 3 MPaG. Then, 0.4 mmol of triisobutyl aluminum, 0.0002 mmol of [diphenylmethylene(η⁵-(3-n-butyl cyclopentadienyl) (η⁵-(2,7-di-t-butyl fluorenyl)] zirconium dichloride, and 0.002 mmol of N,N-dimethylanilinium tetrakis (pentafluorophenyl) borate were injected with nitrogen, and polymerization was started by stirring with a rotation of 400 rpm. Ethylene was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried at 80°C under reduced pressure for 10 hours. The ethylene content of the resulting polymer (polymer 1) was 49.5 mol%, Mw was 5,100, Mw/Mn was 1.7, B-value was 1.2, and a kinematic viscosity at 100°C was 150 mm²/s.

### [Polymerization Example 2]

760 ml of heptane and 120 g of propylene were charged into a stainless steel autoclave with a volume of 2 L sufficiently substituted with nitrogen, and the temperature in the system was raised to 150°C, and then 0.85 MPa of hydrogen and 0.19 MPa of ethylene were supplied to raise the total pressure to 3 MPaG. Then, 0.4 mmol of triisobutyl aluminum, 0.0002 mmol of dimethylsilyl bis(indenyl)zirconium dichloride, and 0.059 mmol of MMA were injected with nitrogen, and polymerization was started by stirring with a rotation of 400 rpm. Ethylene was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried at 80°C under reduced pressure for 10 hours. The ethylene content of the resulting polymer (Polymer 2) was 48.5 mol%, Mw was 5,000, Mw/Mn was 1.8, B-value was 1.2, and a kinematic viscosity at 100°C was 150 mm²/s.

### [Polymerization Example 3]

250 mL of heptane was charged into a glass polymerization vessel with a volume of 1 L sufficiently substituted with nitrogen, and the temperature in the system was raised to 130°C, and then 25 L/hr of ethylene, 75 L/hr of propylene, and 100 L/hr of hydrogen were continuously supplied into the polymerization vessel, and stirred with a rotation of 600 rpm. Then, 0.2 mmol of triisobutyl aluminum was charged into a polymerization vessel, and 1.213 mmol of MMAO and 0.00402 mmol of [[diphenylmethylene(η⁵-(3-n-butyl cyclopentadienyl) (η⁵-(2,7-di-t-butyl fluorenyl)] zirconium dichloride, which were pre-mixed in toluene for 15 minutes or more, were charged into a polymerization vessel to start the polymerization. Ethylene, propylene and hydrogen were then continuously supplied, and polymerization took place at 130°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 0.77 g of an ethylene-propylene copolymer. The ethylene content of the resulting polymer (Polymer 3) was 48.8 mol%, Mw was 4,100, Mw/Mn was 1.7, B-value was 1.2, and kinematic viscosity at 100°C was 100 mm²/s.

### [Polymerization Example 4]

250 mL of heptane was charged into a glass polymerization vessel with a volume of 1 L sufficiently substituted with nitrogen, and the temperature in the system was raised to 130°C, and then 25 L/hr of ethylene, 75 L/hr of propylene, and 100 L/hr of hydrogen were continuously supplied into the polymerization vessel, and stirred with a rotation of 600 rpm. Then, 0.2 mmol of triisobutyl aluminum was charged into a polymerization vessel, and 1.213 mmol of MMAO and 0.00402 mmol of dimethylsilyl bis(indenyl)zirconium dichloride, which were pre-mixed in toluene for 15 minutes or more, were charged into a polymerization vessel to start the polymerization. Ethylene, propylene and hydrogen were then continuously supplied, and polymerization took place at 130°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 0.77 g of an ethylene-propylene copolymer. The ethylene content of the resulting polymer (Polymer 4) was 48.7 mol%, Mw was 4,200, Mw/Mn was 1.8, B-value was 1.2, and kinematic viscosity at 100°C was 100 mm²/s.

### [Example 1]

54.0% by weight of Polymer 3 obtained in Polymerization Example 3 as the ethylene-propylene copolymer (A), 33.3% by weight of poly·α-olefin (NEXBASE 2006 made by NESTE OIL) whose kinematic viscosity at 100°C is 5.825 mm²/s and classified in API Group (IV) as lubricating oil base, 10.0% by weight of fatty acid ester DIDA (made by DAIHACHI CHEMICAL INDUSTRY CO., LTD) classified in API Group (V), and 2.7 parts by weight of extreme pressure agent HITEC307 (made by AFTON) were compounded and the viscosity was adjusted to correspond to ISO220. Physical properties of the lubricating oil of the compounding oil are shown in Table 2.

### [Example 2]

The components were compounded similarly to Example 1 except that 47.0% by weight of Polymer 1 obtained in Polymerization Example 1 was used instead of 54.0% by weight of Polymer 3 and the compounded amount of the poly·α-olefin (NEXBASE 2006) was 40.3% by weight, and the viscosity of the compound was adjusted to correspond to ISO220.Physical properties of the lubricating oil of the compounding oil are shown in Table 2.

### [Example 3]

The components were compounded similarly to Example 1 except that the compounded amount of Polymer 3 was 64.0% by weight and the compounded amount of poly·α-olefin (NEXBASE 2006) was 23.3% by weight, and the viscosity of the compound was adjusted to correspond to ISO320. Physical properties of the lubricating oil of the compounding oil are shown in Table 2.

### [Example 4]

The components were compounded similarly to Example 2 except that the compounded amount of Polymer 1 was 55.0% by weight and the compounded amount of poly·α-olefin (NEXBASE 2006) was 32.3% by weight, and the viscosity of the compound was adjusted to correspond to ISO220.Physical properties of the lubricating oil of the compounding oil are shown in Table 2.

### [Example 5]

The components were compounded similarly to Example 1 except that the compounded amount of Polymer 3 was 75.0% by weight and the compounded amount of poly·α-olefin (NEXBASE 2006) was 12.3% by weight, and the viscosity of the compound was adjusted to correspond to ISO460. Physical properties of the lubricating oil of the compounding oil are shown in Table 2.

### [Example 6]

The components were compounded similarly to Example 2 except that the compounded amount of Polymer 1 was 64.0% by weight and the compounded amount of poly·α-olefin (NEXBASE 2006) was 23.3% by weight, and the viscosity of the compound was adjusted to correspond to ISO460. Physical properties of the lubricating oil of the compounding oil are shown in Table 2.

### [Example 7]

48.0% by weight of Polymer 3 obtained in Polymerization Example 3 as the ethylene·propylene copolymer (A), 48.8% by weight of mineral oil YUBASE-6 classified as API Group (III) as a lubricating oil base, 2.7 parts by weight of extreme pressure agent HITEC307, and 0.5 parts by weight of pour point lowering agents ACLUBE 146 were compounded, and the viscosity of the compound was adjusted to correspond to ISO220. Physical properties of the lubricating oil of the compounding oil are shown in Table 2.

### [Example 8]

The components were compounded similarly to Example 7 except that 41.0% by weight of Polymer 1 obtained in Polymerization Example 1 was used instead of 48.0% by weight of Polymer 3 and the compounded amount of mineral oil YUBASE-6 was 55.8% by weight, and the viscosity of the compound was adjusted to correspond to ISO220. Physical properties of the lubricating oil of the compounding oil are shown in Table 2.

### [Example 9]

The components were compounded similarly to Example 7 except that the compounded amount of Polymer 3 was 59.0% by weight and the compounded amount of mineral oil YUBASE-6 was 37.8% by weight, and the viscosity of the compound was adjusted to correspond to ISO320. Physical properties of the lubricating oil of the compounding oil are shown in Table 2.

### [Example 10]

The components were compounded similarly to Example 8 except that the compounded amount of Polymer 1 was 50.0% by weight and the compounded amount of mineral oil YUBASE-6 was 46.8% by weight, and the viscosity of the compound was adjusted to correspond to ISO220. Physical properties of the lubricating oil of the compounding oil are shown in Table 2.

### [Example 11]

The components were compounded similarly to Example 7 except that the compounded amount of Polymer 3 was 69.0% by weight and the compounded amount of mineral oil YUBASE-6 was 27.8% by weight, and the viscosity of the compound was adjusted to correspond to ISO460. Physical properties of the lubricating oil of the compounding oil are shown in Table 2.

### [Example 12]

The components were compounded similarly to Example 8 except that the compounded amount of Polymer 1 was 59.0% by weight and the compounded amount of mineral oil YUBASE-6 was 37.8% by weight, and the viscosity of the compound was adjusted to correspond to ISO220. Physical properties of the lubricating oil of the compounding oil are shown in Table 2.

### [Comparative Example 1]

The components were compounded similarly to Example 1 except that 54.0% by weight of Polymer 4 obtained in Polymerization Example 4 was used instead of 54.0% by weight of Polymer 3, and the viscosity of the compound was adjusted to correspond to ISO220. Physical properties of the lubricating oil of the compounding oil are shown in Table 2.

### [Comparative Example 2]

The components were compounded similarly to Example 1 except that 47.0% by weight of Polymer 2 obtained in Polymerization Example 2 was used instead of 54.0% by weight of Polymer 3 and the compounded amount of the poly·α-olefin (NEXBASE 2006) was 40.3% by weight, and the viscosity of the compound was adjusted to correspond to ISO220. Physical properties of the lubricating oil of the compounding oil are shown in Table 2.

### [Comparative Example 3]

The components were compounded similarly to Example 1 except that 64.0% by weight of Polymer 2 obtained in Polymerization Example 2 was used instead of 54.0% by weight of Polymer 3 and the compounded amount of the poly·α-olefin (NEXBASE 2006) was 23.3% by weight, and the viscosity of the compound was adjusted to correspond to ISO220. Physical properties of the lubricating oil of the compounding oil are shown in Table 2.

### [Comparative Example 4]

The components were compounded similarly to Example 11 except that 69.0% by weight of Polymer 4 obtained in Polymerization Example 4 was used instead of 69.0% by weight of Polymer 3, and the viscosity of the compound was adjusted to correspond to ISO460. Physical properties of the lubricating oil of the compounding oil are shown in Table 2.

### [Comparative Example 5]

The components were compounded similarly to Example 12 except that 59.0% by weight of Polymer 2 obtained in Polymerization Example 2 was used instead of 59.0% by weight of Polymer 1, and the viscosity of the compound was adjusted to correspond to ISO220. Physical properties of the lubricating oil of the compounding oil are shown in Table 2.

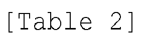

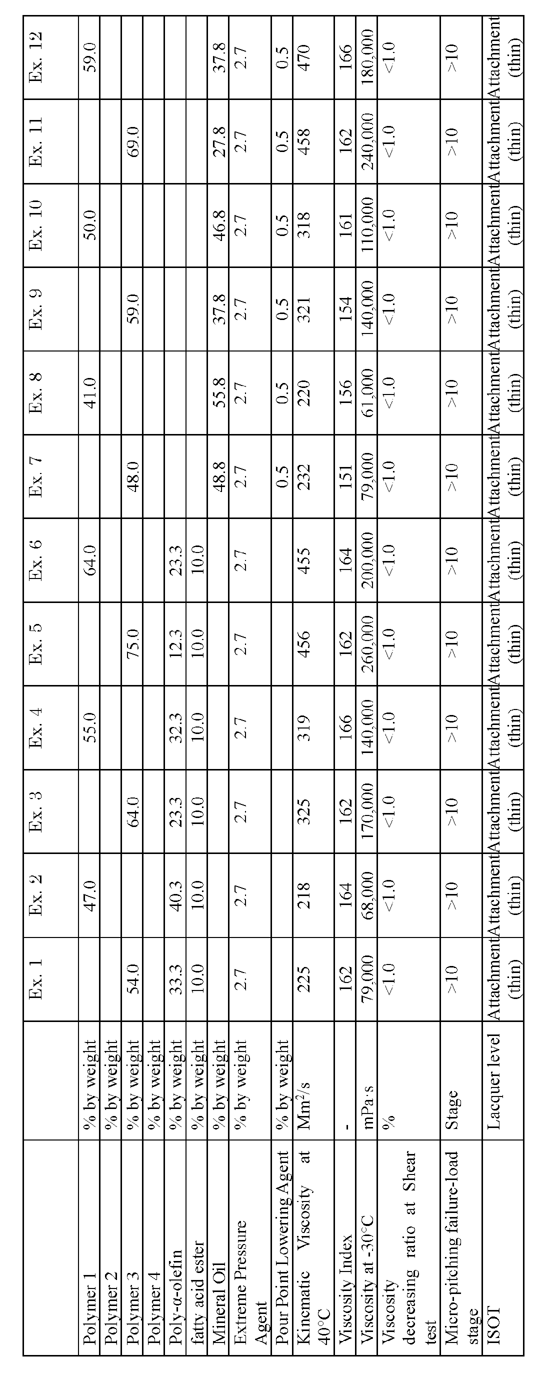

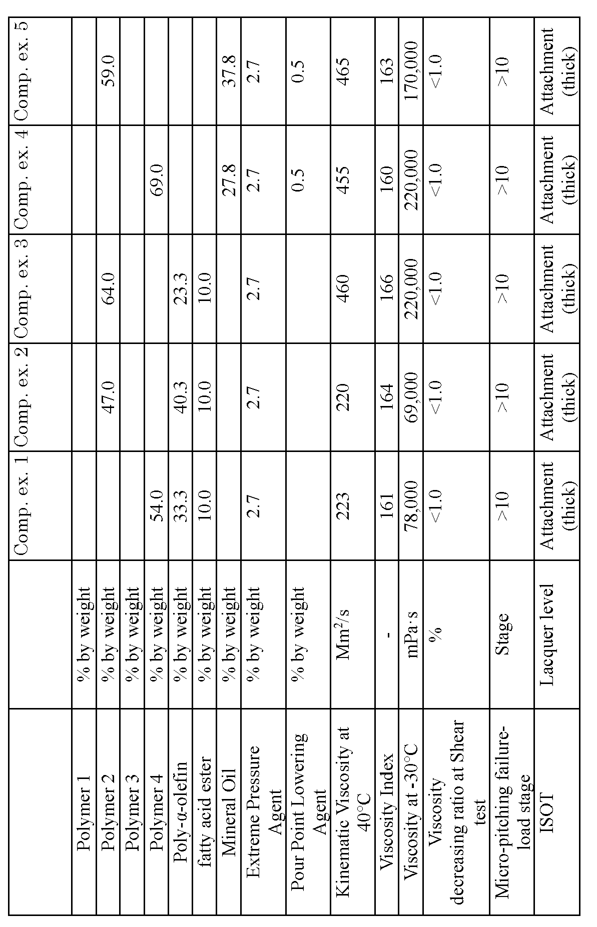

### Industrial Applicability

Because of having excellent low-temperature viscosity properties and shear stability, as well as thermal and oxidation stability, the lubricating oil composition of the present invention is excellent for energy conservation and resource saving, and it is suitably effective as an industrial lubricating oil, especially a lubricating oil for wind power generation.

## Claims

1. A lubricating oil containing 30 to 90% by weight of a liquid random copolymer (A) of ethylene and α-olefin prepared by the below method (α), and 10 to 70% by weight of a lubricating oil base consisting of one or more components selected from a synthetic oil (B) having the properties of (B1) to (B3) or a mineral oil (C) having the properties of (C1) to (C3) (note that the sum total of the components (A), (B) and (C) is 100% by weight).
(B1) The synthetic oil has a kinematic viscosity at 100°C of 2 to 20 mm²/s
(B2) The synthetic oil has a viscosity index of 130 or more
(B3) The synthetic oil has a pour point of -30°C or lower
(C1) The mineral oil has a kinematic viscosity at 100°C of 2 to 10 mm²/s
(C2) The mineral oil has a viscosity index of 120 or more
(C3) The mineral oil has a pour point of -10°C or lower (Method (α))
a method (α) for preparing a liquid random copolymer of ethylene and α-olefin,
comprising a step of carrying out solution polymerization of ethylene and α-olefin having 3 to 20 carbon atoms, under a catalyst system containing
(a) a bridged metallocene compound represented by the following Formula 1 and
(b) at least one compound selected from a group consisting of
(i) an organoaluminum oxy-compound, and
(ii) a compound which reacts with the bridged metallocene compound to form ion pairs. 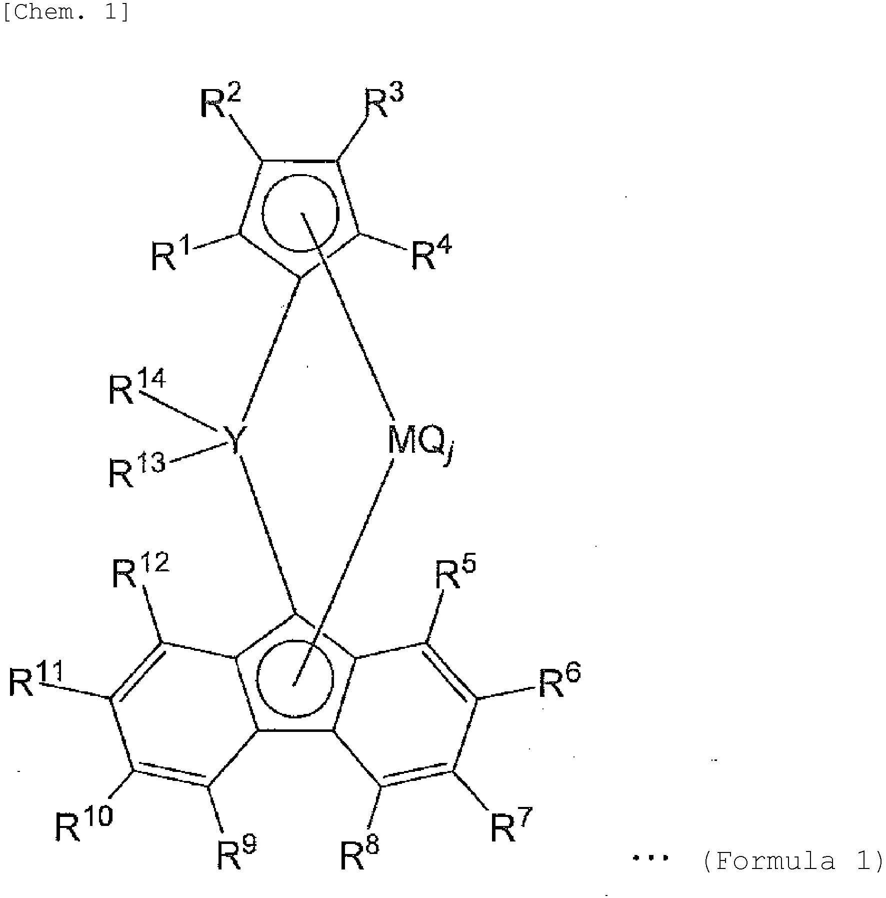
[In Formula 1, R¹, R², R³, R⁴, R⁵, R⁸, R⁹ and R¹² are respectively and independently hydrogen atom, hydrocarbon group or silicon-containing hydrocarbon group, and adjoining groups are optionally connected to each other to form a ring structure,
R⁶ and R¹¹, being the same, are hydrogen atom, hydrocarbon group or silicon-containing hydrocarbon group,
R⁷ and R¹⁰, being the same, are hydrogen atom, hydrocarbon group or silicon-containing hydrocarbon group,
R⁶ and R⁷ are optionally connected to hydrocarbon having 2 to 3 carbon atoms to form a ring structure,
R¹¹ and R¹⁰ are optionally connected to hydrocarbon having 2 to 3 carbon atoms to form a ring structure,
R⁶, R⁷, R¹⁰ and R¹¹ are not hydrogen atom at the same time;
Y is a carbon atom or silicon atom;
R¹³ and R¹⁴ are independently aryl groups;
M is Ti, Zr or Hf;
Q is independently halogen, hydrocarbon group, an anionic ligand or a neutral ligand which can be coordinated to a lone pair of electrons; and
j is an integer of 1 to 4.]

2. The lubricating oil composition according to Claim 1, wherein in the metallocene compound represented by the above Formula 1, at least one among substituents (R1, R2, R3 and R4) bonded to a cyclopentadienyl group, is a hydrocarbon group having 4 or more carbon atoms.

3. The lubricating oil composition according to Claim 1 or 2, wherein R⁶ and R¹¹, being the same, are hydrocarbon groups having 1 to 20 carbon atoms.

4. The lubricating oil composition according to any one of Claims 1 to 3, wherein in the metallocene compound represented by the above Formula 1, substituent (R² or R³) bonded to the 3-position of the cyclopentadienyl group is a hydrocarbon group.

5. The lubricating oil composition according to Claim 4, wherein in the metallocene compound represented by the above Formula 1, the hydrocarbon group (R² or R³) bonded to the 3-position of the cyclopentadienyl group is an n-butyl group.

6. The lubricating oil composition according to any one of Claims 1 to 5, wherein in the metallocene compound represented by the Formula 1, substituents (R⁶ and R¹¹) bonded to the 2-position and the 7-position of the fluorenyl group are all tert-butyl groups.

7. The lubricating oil composition according to any one of Claims 1 to 6, wherein the compound which reacts with the bridged metallocene compound to form an ion pairs is a compound represented by the Formula 6 below: 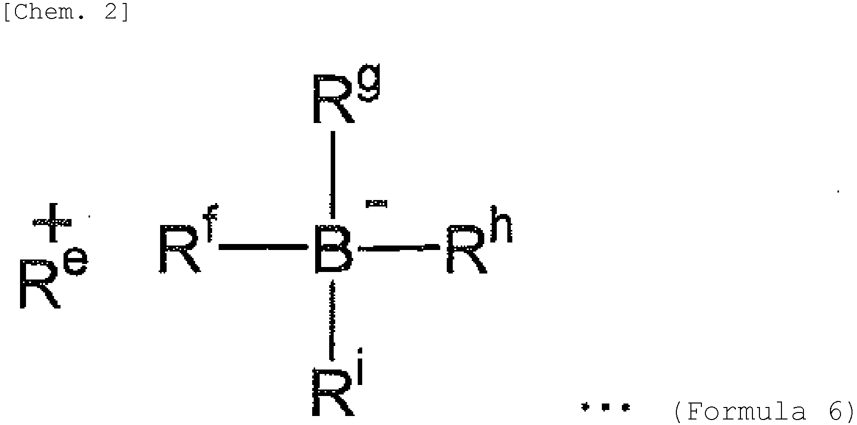 [In Formula 6, Re+ is H+, a carbenium cation, an oxonium cation, an ammonium cation, a phosphonium cation, a cycloheptyltrienyl cation, or a ferrocenium cation having a transition metal, and Rf to Ri each is independently a hydrocarbon group having 1 to 20 carbon atoms.]

8. The lubricating oil composition according to Claim 7, wherein the ammonium cation is a dimethylanilinium cation.

9. The lubricating oil composition according to Claim 7 or 8, wherein the catalyst system further comprises an organoaluminum compound selected from a group consisting of trimethyl aluminum and triisobutyl aluminum.

10. The lubricating oil composition according to any one of Claim 1 to 9, wherein the copolymer (A) is a copolymer consisting of ethylene and α-olefin having 3 to 10 carbon atoms.

11. The lubricating oil composition according to any one of Claims 1 to 10, wherein the synthetic oil (B) is a lubricating oil base selected from poly α-olefin (PAO) or ester oil.

12. The lubricating oil composition according to any one of Claims 1 to 11, wherein the lubricating oil composition further contains a pour point lowering agent.

13. The lubricating oil composition according to any one of Claims 1 to 12, wherein the viscosity of the lubricating oil composition at 40°C is in the range of 190 to 750 mm²/s.

14. A lubricating oil composition containing 30 to 90% by weight of a liquid random copolymer of ethylene and α-olefin having the properties of the below (A1) to (A5), and 10 to 70% by weight of a lubricating oil base consisting of one or more components selected from a synthetic oil (B) having the properties of (B1) to (B3) or a mineral oil (C) having the properties of (C1) to (C3) (note that the sum total of the components (A), (B) and (C) is 100% by weight).
(A1) The liquid random copolymer comprises 40 to 60 mol% of the ethylene unit and 60 to 40 mol% of an α-olefin unit having 3 to 20 carbon atoms
(A2) The liquid random copolymer has a number average molecular weight (Mn) of 500 to 10,000 and a molecular weight distribution (Mw/Mn, Mw is the weight average of the molecular weight) of 3 or less measured by gel permeation chromatography (GPC)
(A3) The liquid random copolymer has kinetic viscosity at 100°C of 30 to 5,000 mm²/s
(A4) The liquid random copolymer has a pour point of 30 to - 45°C
(A5) The liquid random copolymer has the bromine number of 0.1g/100g or less
(B1) The synthetic oil has a kinematic viscosity at 100° C of 2 to 20 mm²/s
(B2) The synthetic oil has a viscosity index of 130 or more
(B3) The synthetic oil has a pour point of -30°C or lower
(C1) The mineral oil has a kinematic viscosity at 100°C of 2 to 10 mm²/s
(C2) The mineral oil has a viscosity index of 120 or more
(C3) The mineral oil has a pour point of -10°C or lower

15. The lubricating oil composition for industrial use according to any one of Claims 1 to 14, wherein the lubricating oil composition is an oil for gears for wind power generation.

16. A method for producing a lubricating oil composition comprising the steps of:
preparing a liquid random copolymer (A) of ethylene and α-olefin by the following method (α), and
preparing a lubricating oil composition by mixing 30 to 90% by weight of the liquid random copolymer (A), and 10 to 70% by weight of a lubricating oil base consisting of one or more components selected from a synthetic oil (B) having the properties of (B1) to (B3) or a mineral oil (C) having the properties of (C1) to (C3) (note that the sum total of the components (A), (B) and (C) is 100 parts by weight).
(B1) The synthetic oil has a kinematic viscosity at 100°C of 2 to 10 mm²/s
(B2) The synthetic oil has a viscosity index of 130 or more
(B3) The synthetic oil has a pour point of -30°C or lower
(C1) The mineral oil has a kinematic viscosity at 100°C of 2 to 10 mm²/s
(C2) The mineral oil has a viscosity index of 120 or more
(C3) The mineral oil has a pour point of -10°C or lower (Method (α))
a method (α) for preparing a liquid random copolymer of ethylene and α-olefin,
comprising a step of carrying out solution polymerization of ethylene and α-olefin having 3 to 20 carbon atoms, under a catalyst system containing
(a) a bridged metallocene compound represented by the following Formula 1 and
(b) at least one compound selected from a group consisting of
(i) an organoaluminum oxy-compound, and
(ii) a compound which reacts with the bridged metallocene compound to form ion pairs. 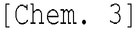 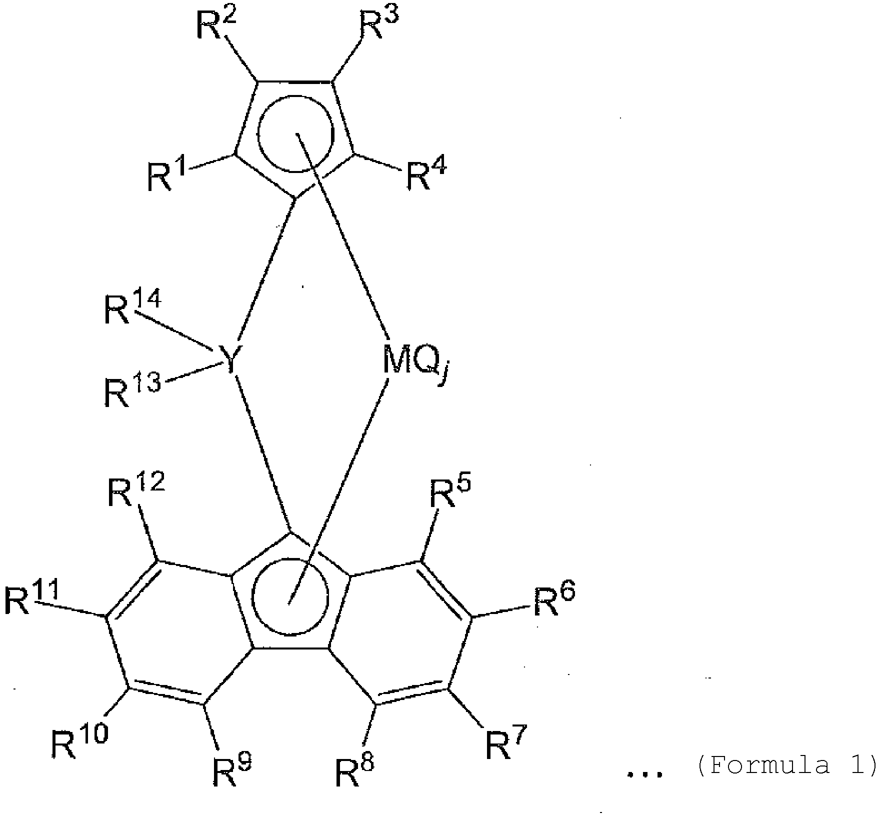
[In Formula 1, R¹, R², R³, R⁴, R⁵, R⁸, R⁹ and R¹² are respectively and independently hydrogen atom, hydrocarbon group or silicon-containing hydrocarbon group, and adjoining groups are optionally connected to each other to form a ring structure,
R⁶ and R¹¹, being the same, are hydrogen atom, hydrocarbon group or silicon-containing hydrocarbon group,
R⁷ and R¹⁰, being the same, are hydrogen atom, hydrocarbon group or silicon-containing hydrocarbon group,
R⁶ and R⁷ are optionally connected to hydrocarbon having 2 to 3 carbon atoms to form a ring structure,
R¹¹ and R¹⁰ are optionally connected to hydrocarbon having 2 to 3 carbon atom to form a ring structure,
R⁶, R⁷, R¹⁰ and R¹¹ are not hydrogen atoms at the same time;
Y is a carbon atom or silicon atom;
R¹³ and R¹⁴ are independently aryl groups;
M is Ti, Zr or Hf;
Q is independently halogen, hydrocarbon group, an anionic ligand or a neutral ligand which can be coordinated to a lone pair of electrons; and
j is an integer of 1 to 4.]
